# EUROPEAN PATENT SPECIFICATION

(11) **EP 1 492 360 B1**
(45) Date of publication and mention of the grant of the patent: **16.08.2006**
(21) Application number: 03014192.3
(22) Date of filing: 24.06.2003
(51) Int. Cl.: H04Q 3/72, H04Q 7/22

(54) **Method and communication device for transmitting data**
Verfahren und Kommunikations-Vorrichtung zum Versenden von Daten
Procédé et dispositif de communication pour envoyer des données

(43) Date of publication of application: 29.12.2004
(73) Proprietor: Sony Ericsson Mobile Communications AB, 221 88 Lund (SE)
(72) Inventor: Ott, Stefan, Sony Ericsson Mobile Communications, 85609 Aschheim-Dornach (DE)
(74) Representative: Körber, Martin Hans

(56) References cited:
- WO-A-01/49060
- BELGACOM: "Short Message communication for PSTN/ISDN" SPECIFICATION USER NETWORK INTERFACE (PROTOCOL), [Online] 10 March 2003 (2003-03-10), pages 1-13, XP002254945 Retrieved from the Internet: <URL:http://www.belgacom.be/web/proto/abou t/pdf/BGC_D_48_0204_30_01_E(ed12).pdf> [retrieved on 2003-09-18]

## Description

The present invention relates to a method and a communication device for transmitting data via a communication service. In particular, the present invention relates to a portable telephone for use with the GSM communication network wherein the service used to transmit the data is the Short Message Service (SMS).

Wireless communication is nowadays widely used. The most popular wireless communication standard used in Europe is the GSM standard which offers the possibility of an easy and widely available telephone communication. In addition to the pure telephone communication, GSM and other modern wireless or fixed communication networks like e.g. ISDN support a plurality of different features or services which can be activated or deactivated by the user of a communication device.

WO 01/49060 A1 describes programming for a mobile telephone operable to change the operational behaviour of the mobile telephone in placing a telephone call. A user selected number is transformed into a different number or a sequence of actions.

"Short message communication for PSTN/ISDN" by Belgacomm, version 1.2 of 10 march 2003, describes a SMS service not using an appropriate hash code to know when the originating CLI may be communicated or not.

One example of an option offered by GSM or ISDN is the so-called Calling Line Identification Presentation (CLIP). If this feature is activated, the telephone number of the caller can be identified by the communication device of the callee and is for example shown on the display of his telephone. However, sometimes a caller would prefer to hide his telephone number such that the callee is not able to identify the telephone number of his partner of the conversation. In this case, the initiator of the telephone call can activate the Calling Line Identification Restriction (CLIR) option which prevents an identification of his telephone number by the callee.

The two above-mentioned options are usually activated or deactivated as a standard by using the menu of the telephone. In this case, every time the user of the telephone initiates a communication link, the callee is informed on the number of the caller or not depending on whether the CLIP or the CLIR option in the menu has been chosen.

However, sometimes the user of a telephone prefers to distinguish between people which he wants to show his caller ID and other people which should not be informed on his caller ID. In this case, it is possible to individually activate or deactivate the option for each call by using a special control code or control prefix. In the case of GSM, one has to enter the control prefix "*31#" just before the telephone number of the callee in order to activate the CLIP option, i.e. in order to allow the callee to identify the ID of the caller. However, if one prefers to be hidden one has to enter the control prefix "#31#" first for activating the CLIR option.

In addition to the two above-mentioned codes which control the presentation of the telephone number of the caller, a plurality of further control codes are available in the GSM standard which are used to control e.g. the call barring or call forwarding/diversion. These codes provide a simple way to control the different features offered by the communication system.

The use of these control codes works even fine for international phone calls and it is possible to store telephone numbers together with a control prefix in the phone book of the telephone. In this way, it is possible to individually assign to each phone book entry the CLIP or CLIR function.

A disadvantage of the above-mentioned GSM control codes is however that they are not supported by the Short Message Service (SMS). This service, which is extremely popular in Europe allows messages up to 160 characters of text in length to be received and sent over mobile devices. However, the SMS gateway of the cellular operator does not understand GSM control prefixes. Thus, if a user of a portable telephone wants to transmit data via the Short Message Service and uses phone book entries of his telephone for the submission of the identification number of the addressee of the message, he can only use phone book entries which do not contain a GSM control code or prefix. Otherwise, the SMS gateway would not understand the identification number of the addressee and return an error.

In order to overcome this problem, it would be necessary to store each telephone number two times in the phone book, the first time together with the control prefix and the second time without a control prefix wherein the first entry is used for normal telephone conversation using the GSM service and the second entry is used for transmitting SMS messages using the Short Message Service. Obviously, this solution is complicated and results in a superfluous duplication of phone book entries.

It is therefore an object of the present invention to overcome the above-mentioned problems.

The above object is achieved by a method of transmitting data via a communication service according to claim 1.

In accordance with the present invention, a filter function is implemented in the communication device that filters out characters or character strings from phone book entries which are not compatible with the communication service used to transmit the data. In particular, the method according to the present invention comprises a first step in which a control code or prefix is temporarily removed from the identification number entered by the user or stored in the phone book and a second step in which the data are transmitted to the addressee using the filtered identification number obtained in the first step. In the example mentioned above, the GSM CLIP or CLIR control prefix is temporarily removed from the phone book entry when an SMS message is transmitted. It is therefore not necessary to store an additional phone book entry without a control prefix.

According to a preferred embodiment of the present invention, the filter function is able to interpret the removed control code and to simulate the function aimed for by the code. For example, the SMS message is transmitted without allowing the recipient of the message to identify the caller ID of the sender if the control prefix that was parsed and removed from the phone book entry was a CLIR prefix.

The present invention also relates to a communication device - in particular to a wireless communication device - for transmitting messages via a communication service wherein the communication device comprises filtering means for
- automatically identifying characters or character strings in an identification number of an addressee entered or stored in the communication device which characters or character strings are not compatible with the communication service,
- temporarily removing such characters or character strings from the identification number and
- transmitting the data to the addressee using the filtered identification number.

In the following description, the present invention is explained in more detail by means of an embodiment relating to the enclosed drawings, in which
- Fig. 1: shows a schematic top view of a portable communication device in accordance with the present invention; and
- Fig. 2: shows the steps of the filter function implemented in the portable communication device of Fig. 1.

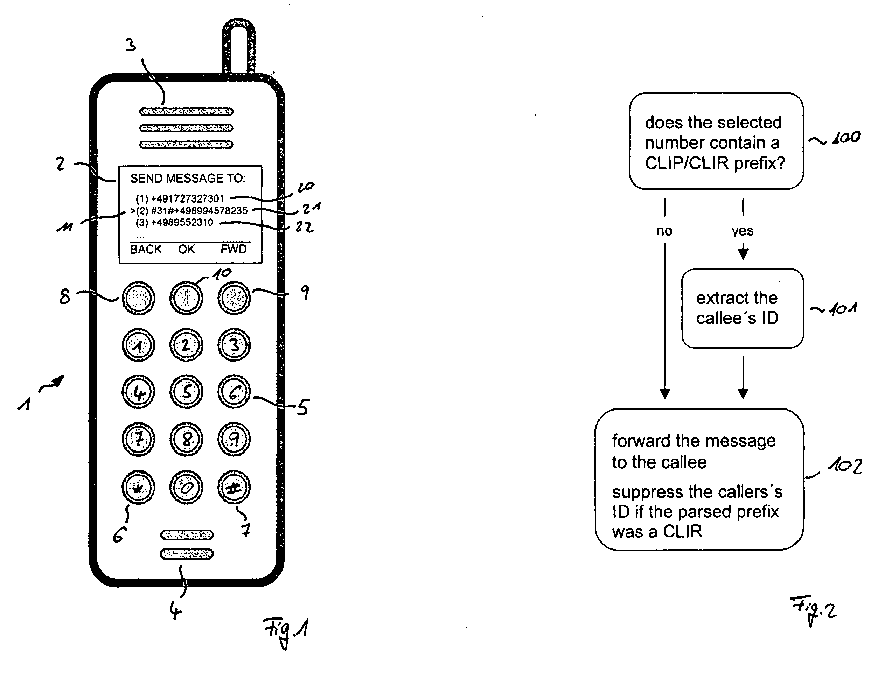

Fig. 1 shows a schematic top view of a portable telephone 1 of a wireless communication system. In the embodiment shown, the telephone 1 uses the GSM communication system. Nevertheless, it is to be understood that the present invention also relates to the use of other communication systems and services. As mentioned above, other communication standards like ISDN or UMTS also use control codes or control prefixes which can be filtered out with the present invention if they are not compatible with the communication service used to transmit data.

The portable telephone 1 shown in Fig. 1 comprises a display means 2 on which pieces of information like characters, menu items, text information, names or the like can be displayed. The telephone 1 further comprises a loudspeaker 3 on the upper front part and a microphone 4 on the lower front part of the casing. Further, it comprises the usual ten alphanumeric keys 5 (numbers 0 to 9), a star key 6 and a pound key 7.

On the upper part of the key pad, three further keys 8 to 10 are provided which are used as so-called soft keys. This means, the functionality of these keys depends on the state of the telephone 1 wherein to function allocated to a key is shown on the bottom line of the display means 2. In the example shown in Fig. 1, the three keys 8 to 10 can be used to select an desired entry from the phone book. As displayed in the bottom line of the display means 2, the left key 8 can be used to preselect an entry with a lower number and the right key 9 can be used to switch to the entry with the next higher number. The middle key 10 is finally used to select the entry that is marked with the small arrow 11.

The filter function provided by the present invention is of particular use when an SMS message is to be sent to an addressee whose identification number is stored as a phone book entry that includes control codes for the GSM network. The Short Message Service (SMS) as defined within the GSM digital mobile phone standard is very popular in Europe since it allows to transmit short text messages via the communication system. However, a disadvantage is that the SMS gateway is not able to interpret the GSM control code.

In the embodiment shown in Fig. 1, the mobile phone 1 is in a status wherein the user has already entered the text message by using the alphanumeric key pad. He is now requested to enter the identification number of the person to whom the message is to be sent. Usually, one can enter the number manually digit by digit or use already stored phone book entries.

In Fig. 1, the user of the telephone can choose between three different phone book entries 20 to 22 shown on the display means 2, wherein the second entry 21 comprises the control prefix "#31#" for activating the CLIR feature. This means, every time the user of the telephone I establishes a telephone link using the second phone book entry 21, the person with the identification number "+498994578235" is contacted wherein this person is not able to identify the number of the telephone 1.

However, in the present case the user of the telephone 1 does not intend to talk but wants to send an SMS message. Normally, if he chooses the second entry 21, the SMS message would not be transmitted since the SMS gateway is not able to interpret the control prefix "#31#". However, in accordance with the present invention, the telephone 1 includes a filter function which automatically identifies and removes the incompatible control prefix if the entry is used for sending an SMS message.

In the present case, this filter function which is implemented by the software of the mobile telephone 1 removes the prefix "#31#" and forwards the extracted number "+498994578235" which is finally used as the identification number of the addressee of the SMS message. As a matter of course, the filter function would be also able to filter out other incompatible control characters or codes like e.g. the CLIP code "*31#". Thus, the user of the telephone 1 can still store phone book entries together with control codes since they are automatically removed when they would provoke errors.

Fig. 2 shows the different steps of the filter function of the present invention. In the first step 100, the filter function determines whether the selected phone book entry or manually entered number contains a control prefix, i.e., a character or character string which is not compatible with the Short Message Service. If this is not the case, the message is right away forwarded to the addressee by using the original number in step 102. However, if the filter function observes a control prefix, this prefix is removed in step 101 and only the addressee's pure identification number is extracted. This filtered number is then used to forward the message in step 102.

In a preferred embodiment of the present invention, the filter function is also able to interpret the parsed control code or prefix and to control the communication means of the telephone accordingly. This means, in the embodiment shown in Fig. 1 and 2, the communication means are controlled in a way that the identification number of the caller is again suppressed since the prefix that was filtered out in a step 101 was a CLIR prefix. As intended by the parsed prefix, the recipient of the SMS message is again not able to identify the sender of the message.

Accordingly, the present invention allows to use the known control codes or control prefixes without the need of multiple storing of phone book entries. The filter function is able to handle phone book entries containing control codes also with services which do not support these codes.

## Claims

1. Method of transmitting a text message to an addressee via a wireless communication service using a communication device (1),
whereby identification numbers which are used to identify an addressee for a wireless telephone communication are also used to identify an addressee for the transmission of a text message,
said method comprising the following steps:
verifying whether an identification number (21) of the addressee entered or stored in the communication device (1) contains a control code or a prefix which enable or restrict an identification of the communication device (1) by an addressee of a telephone communication and which are not supported by the wireless communication service for transmitting the text message, and
if such a control code or prefix were parsed, using the entered or stored identification number (21) without this control code or prefix in order to transmit the text message to the addressee,
whereby the parsed control code or prefix is interpreted in order to enable or restrict an identification of the communication device (1) transmitting the text message by the addressee.

2. Method according to claim 1,
wherein the suppressed control code or prefix is a GSM code.

3. Method according to claim 1 or 2,
wherein the service used to transmit the text message is the Short Message Service (SMS).

4. Method according to one of the preceding claims,
wherein the identification number (21) of the addressee is retrieved from an electronic phone book contained in the communication device (1).

5. Method according to one of the claims 1 to 4,
wherein the identification number of the addressee is manually entered into the communication device (1).

6. Mobile communication device (1) for wireless telephone communication and for transmitting a text message to an addressee via a wireless communication service,
whereby identification numbers which are used to identify an addressee for a wireless telephone communication are also used to identify an addressee for the transmission of a text message,
wherein said communication device (1) comprises filtering means for
- automatically verifying whether an identification number (21) of the addressee entered or stored in the communication device (1) contains a control code or a prefix which enable or restrict an identification of the communication device (1) by an addressee of a telephone communication and which are not supported by the communication service,
- temporarily removing such a control code or prefix from the identification number (21) and
- transmitting the text message to the addressee using the filtered identification number, whereby the removed control code or prefix is interpreted in order to control a further comprised communication means to transmit the text message to the addressee in a way that an identification of the sender of the data by the addressee is enabled or restricted.

7. Communication device according to claim 6,
wherein the removed control code or prefix is a GSM code.

8. Communication device according to claim 6 or 7,
wherein the service used to transmit the text message is the Short Message Service (SMS).

9. Communication device according to claim 6, 7 or 8,
wherein the communication device (1) is a portable telephone.

10. Communication device according to one of the claims 6 to 9,
wherein the communication device (1) comprises an electronic phone book for storing a plurality of identification numbers.

## Patentansprüche

1. Verfahren zum Übertragen einer Textnachricht an einen Adressaten über einen Dienst für eine drahtlose Kommunikation mit Hilfe einer Kommunikationseinrichtung (1),
wobei Identifikationsnummern, die verwendet werden, um einen Adressaten für eine drahtlose Telefonkommunikation zu identifizieren, auch verwendet werden, um einen Adressaten für die Übertragung einer Textnachricht zu identifizieren,
wobei das Verfahren folgende Schritte umfasst:
Überprüfen, ob eine Identifikationsnummer (21) des eingegebenen oder in der Kommunikationseinrichtung (1) gespeicherten Adressaten einen Steuercode oder einen Vorsatzcode enthält, der eine Identifikation der Kommunikationseinrichtung (1) durch einen Adressaten einer Telefonkommunikation zulässt oder verhindert und der durch den Dienst für die drahtlose Kommunikation zum Übertragen der Textnachricht nicht unterstützt wird, und
wenn ein solcher Steuerungscode oder Vorsatzcode analysiert werden, Verwenden der eingegebenen oder gespeicherten Identifikationsnummer (21) ohne diesen Steuerungscode oder Vorsatzcode, um die Textnachricht an den Adressaten zu übertragen,
wobei der analysierte Steuerungscode oder Vorsatzcode interpretiert wird, um eine Identifikation der Kommunikationseinrichtung (1) zum Übertragen der Textnachricht durch den Adressaten zuzulassen oder zu verhindern.

2. Verfahren nach Anspruch 1, wobei der unterdrückte Steuercode oder Vorsatzcode ein GSM-Code ist.

3. Verfahren nach Anspruch 1 oder 2, wobei der Dienst, der verwendet wird, um die Textnachricht zu übertragen, der Kurznachrichtendienst (SMS) ist.

4. Verfahren nach einem der vorangehenden Ansprüche, wobei die Identifikationsnummer (21) des Adressaten von einem elektronischen Telefonbuch, das in der Kommunikationsreinrichtung (1) enthalten ist, abgerufen wird.

5. Verfahren nach einem der Ansprüche 1 bis 4, wobei die Identifikationsnummer des Adressaten manuell in die Kommunikationseinrichtung (1) eingegeben wird.

6. Mobile Kommunikationseinrichtung (1) für eine drahtlose Telefonkommunikation und zum Übertragen einer Textnachricht an einen Adressaten über einen Dienst für eine drahtlose Kommunikation,
wobei Identifikationsnummern, die zum Identifizieren eines Adressaten für eine drahtlose Telefonkommunikation verwendet werden, auch verwendet werden, um einen Adressaten zum Übertragen einer Textnachricht zu identifizieren, wobei die Kommunikationseinrichtung (1) eine Filtereinrichtung umfasst,
- um automatisch zu überprüfen, ob eine Identifikationsnummer (21) des Adressaten, die in die Kommunikationseinrichtung (1) eingegeben oder darin gespeichert ist, einen Steuercode oder einen Vorsatzcode enthält, der eine Identifikation der Kommunikationseinrichtung (1) durch einen Adressaten einer Telefonkommunikation zulässt oder verhindert und der nicht durch den Kommunikationsdienst unterstützt wird,
- um zeitweise einen solchen Steuerungscode oder Vorsatzcode aus der Identifikationsnummer (21) zu entfernen, und
- um die Textnachricht an den Adressaten mit Hilfe der gefilterten Identifikationsnummer zu übertragen, wobei der entfernte Steuercode oder Vorsatzcode interpretiert wird, um ein weiteres enthaltenes Kommunikationsmittel zu steuern, so dass die Textnachricht an den Adressaten auf eine Weise übertragen wird, dass eine Identifikation des Senders der Daten durch den Adressaten ermöglicht oder verhindert wird.

7. Kommunikationseinrichtung nach Anspruch 6, wobei der entfernte Steuercode oder Vorsatzcode ein GSM-Code ist.

8. Kommunikationseinrichtung nach Anspruch 6 oder 7, wobei der verwendete Dienst, um die Textnachricht zu übertragen, der Kurzmitteilungsdienst (SMS) ist.

9. Kommunikationseinrichtung nach Anspruch 6, 7 oder 8, wobei die Kommunikationseinrichtung (1) ein tragbares Telefon ist.

10. Kommunikationseinrichtung nach einem der Ansprüche 6 bis 9, wobei die Kommunikationseinrichtung ein elektronisches Telefonbuch zum Speichern von mehreren Identifikationsnummern umfasst.

## Revendications

1. Procédé de transmission d'un message de texte à un destinataire par un service de communication sans fil en utilisant un dispositif de communication (1),
dans lequel des numéros d'identification qui sont utilisés pour identifier un destinataire pour une communication téléphonique sans fil sont également utilisés pour identifier un destinataire pour la transmission d'un message de texte,
ledit procédé comprenant les étapes suivantes qui consistent :
à vérifier si un numéro d'identification (21) du destinataire, introduit ou stocké dans le dispositif de communication (1), contient un code de commande ou un préfixe qui valide ou restreint une identification du dispositif de communication (1) par un destinataire d'une communication téléphonique et qui n'est pas supporté par le service de communication sans fil pour la transmission du message de texte, et
si un tel code de commande ou préfixe était analysé, à utiliser le numéro d'identification introduit ou stocké (21) sans ce code de commande ou préfixe pour transmettre le message de texte au destinataire,
dans lequel le code de commande ou préfixe analysé est interprété pour valider ou restreindre une identification du dispositif de communication (1) transmettant le message de texte par le destinataire.

2. Procédé selon la revendication 1,
dans lequel le code de commande ou préfixe supprimé est un code GSM.

3. Procédé selon la revendication 1 ou 2,
dans lequel le service utilisé pour transmettre le message de texte est le service de messages courts (SMS).

4. Procédé selon l'une des revendications précédentes,
dans lequel le numéro d'identification (21) du destinataire est récupéré à partir d'un annuaire électronique contenu dans le dispositif de communication (1).

5. Procédé selon l'une des revendications 1 à 4,
dans lequel le numéro d'identification du destinataire est introduit manuellement dans le dispositif de communication (1).

6. Dispositif de communication mobile (1) pour une communication téléphonique sans fil et pour la transmission d'un message de texte à un destinataire par l'intermédiaire d'un service de communication sans fil, dans lequel des numéros d'identification qui sont utilisés pour identifier un destinataire pour une communication téléphonique sans fil sont également utilisés pour identifier un destinataire pour la transmission d'un message de texte,
dans lequel ledit dispositif de communication (1) comporte un moyen de filtrage destiné
- à vérifier automatiquement si un numéro d'identification (21) du destinataire introduit ou stocké dans le dispositif de communication (1) contient un code de commande ou un préfixe qui valide ou restreint une identification du dispositif de communication (1) par un destinataire d'une communication téléphonique et qui n'est pas supporté par le service de communication,
- à enlever temporairement un tel code de commande ou préfixe du numéro d'identification (21) et
- à transmettre le message de texte au destinataire en utilisant le numéro d'identification filtré, le code de commande ou préfixe enlevé étant interprété pour commander un autre moyen de communication compris pour transmettre le message de texte au destinataire d'une manière telle qu'une identification de l'expéditeur de données par le destinataire est validée ou restreinte.

7. Dispositif de communication selon la revendication 6,
dans lequel le code de commande ou préfixe enlevé est un code GSM.

8. Dispositif de communication selon la revendication 6 ou 7,
dans lequel le service utilisé pour transmettre le message de texte est le service de messages courts (SMS).

9. Dispositif de communication selon la revendication 6, 7 ou 8,
dans lequel le dispositif de communication (1) est un téléphone portable.

10. Dispositif de communication selon l'une des revendications 6 à 9,
dans lequel le dispositif de communication (1) comporte un annuaire électronique pour le stockage de plusieurs numéros d'identification.
